# EUROPEAN PATENT SPECIFICATION

(11) **EP 3 235 611 B1**
(45) Date of publication and mention of the grant of the patent: **22.03.2023**
(21) Application number: 15869779.7
(22) Date of filing: 30.11.2015
(51) Int. Cl.: B25J 19/00, G05B 19/18, G05B 19/418, B25J 9/16, G05B 19/4065

(54) **ROBOT MAINTENANCE ASSIST DEVICE AND METHOD**
VORRICHTUNG UND VERFAHREN ZUR ROBOTERWARTUNGSUNTERSTÜTZUNG
DISPOSITIF ET PROCÉDÉ D'ASSISTANCE À LA MAINTENANCE DE ROBOTS

(30) Priority: 19.12.2014 JP 2014257004; 30.06.2015 JP 2015131422
(43) Date of publication of application: 25.10.2017
(73) Proprietor: Kawasaki Jukogyo Kabushiki Kaisha, Kobe-shi, Hyogo 650-8670 (JP)
(72) Inventor: SAWADA Hiromi, Akashi-shi Hyogo 673-8666 (JP); YOSHIMURA Masato, Akashi-shi Hyogo 673-8666 (JP); SHIMIZU Tomoya, Akashi-shi Hyogo 673-8666 (JP)
(74) Representative: Müller-Boré & Partner Patentanwälte PartG mbB
(86) International application number: PCT/JP2015/083652
(87) International publication number: WO 2016/098571

(56) References cited:
- EP-A1- 1 955 830
- EP-A2- 1 715 397
- JP-A- 2005 148 873
- JP-A- 2005 284 929
- JP-A- 2007 172 150
- JP-A- 2007 190 663
- JP-A- 2013 231 673

## Description

### Technical Field

The present invention relates to a robot maintenance assist device and method for predicting a residual life of a drive system of a robot so as to assist maintenance of the robot.

### Background Art

In an industrial robot, due to its long term use, deterioration (for example, wear of reduction gear) occurs in apparatus configuring a robot drive system for driving a robot arm and a robot external axis, and thereby operation accuracy of the robot declines. Further, if such a state is left untouched, the apparatus configuring the robot drive system is broken and the robot breaks down.

In the industrial robot installed in a production line, the entire production line is stopped when the robot breaks down and productivity declines, which interferes with a production planning. Therefore, there is a market demand that preventive maintenance is performed before the breakdown of the robot so as to prevent the breakdown beforehand.

In order to meet this market demand, a conceivable method is for example to estimate a residual life of the apparatus based on a design life of the apparatus (such as a reduction gear) configuring the robot drive system and operation time of the robot up to the present time.

However, since a robot operation condition supposed when determining the design life of the apparatus and a robot operation condition in an actual work are sometimes significantly different, the method to estimate the residual life of the apparatus based on the design life of the apparatus and the operation time of the robot up to the present time has difficulty in maintaining accuracy of its estimation value.

In contrast, for example Patent Document 1 proposes a technique of collecting data of a robot controller in the actual work via a communication line and performing failure diagnosis and maintenance based on the collected data.

### (Patent Document 1).

### Citation List

### Patent Document

[Patent Document 1] Japanese Patent Application Laid-Open No. 2007-190663

EP 1 955 830 A1 discloses an industrial robot diagnostic method. The method includes performing a condition analysis utilizing at least two selected input signals, wherein each selected input signal indicates a condition related to a property of the industrial robot, performing an analysis of any combination of said selected input signals utilizing a signal modeling of the signals and outputting from said condition analyzer a result being at least one of: a detection of a malfunction of the robot system, an identification of a root cause failure in the robot system and prediction of a potential malfunction in the robot system. The invention further comprises an industrial robot system utilizing said method.

EP 1 715 397 A2 describes that a method of predicting the remaining operational life of a component includes generating a plurality of component data utilizing a machinery monitoring system including a database having at least one rule set, the component data indicative of at least one operational parameter of the component, trending the component data utilizing the rule set, and extrapolating the trended data to facilitate predicting the remaining operational life of the component.

### Summary of Invention

### Objects to be Achieved by the Invention

However, in the above-mentioned conventional technique, necessity of maintenance (parts replacement and the like) at the present time can be determined based on the data at the present time, while, when the maintenance at the present time is determined to be unnecessary, period (timing) when maintenance is needed in the future cannot be specified.

Thus, in the conventional technique, there is a problem that previously planning a work schedule regarding maintenance of the robot with a spare time is difficult, and as result, performing maintenance of the robot in a timely manner is difficult.

The present invention is made considering the above-mentioned problem of the conventional technique, and its object is to provide a robot maintenance assist device and method capable of accurately predicting a residual life of a robot drive system.

### Means for Achieving the Objects

A first aspect of the present invention is a robot maintenance assist device as defined in claim 1.

A second aspect of the present invention is a robot maintenance assist method as defined in claim 4.

### Effect of the Invention

According to the present invention, a robot maintenance assist device and method capable of accurately predicting a residual life of a robot drive system can be provided.

### Brief Description of the Drawings

FIG. 1 is a block diagram illustrating a schematic configuration of a robot maintenance assist device according to one embodiment of the present invention.
FIG. 2 is a figure illustrating an object data used in the robot maintenance assist device in FIG. 1.
FIG. 3 is a figure illustrating set items used in the robot maintenance assist device in FIG. 1.
FIG. 4 is a figure illustrating each item of a trend graph prepared in the robot maintenance assist device in FIG. 1.
FIG. 5 is a figure illustrating an example of the trend graph prepared in the robot maintenance assist device in FIG. 1.
FIG. 6 is a flow chart illustrating a method of predicting a residual life of a robot drive system using the robot maintenance assist device in FIG. 1.

### Embodiment of the Invention

Hereunder, a robot maintenance assist device according to one embodiment of the present invention will be described referring to the drawings.

First of all, a schematic configuration of a robot which is an object of the robot maintenance assist device according to this embodiment will be described. The robot comprises a robot arm and a robot drive system for driving this robot arm and an external axis of the robot.

The robot drive system has a servo motor generating drive force, a reduction gear transmitting drive force from the servo motor to the robot arm and the robot external axis, and an encoder detecting a position of the servo motor. The robot drive system is controlled by a servo control system including a position loop, a velocity loop, and a current loop.

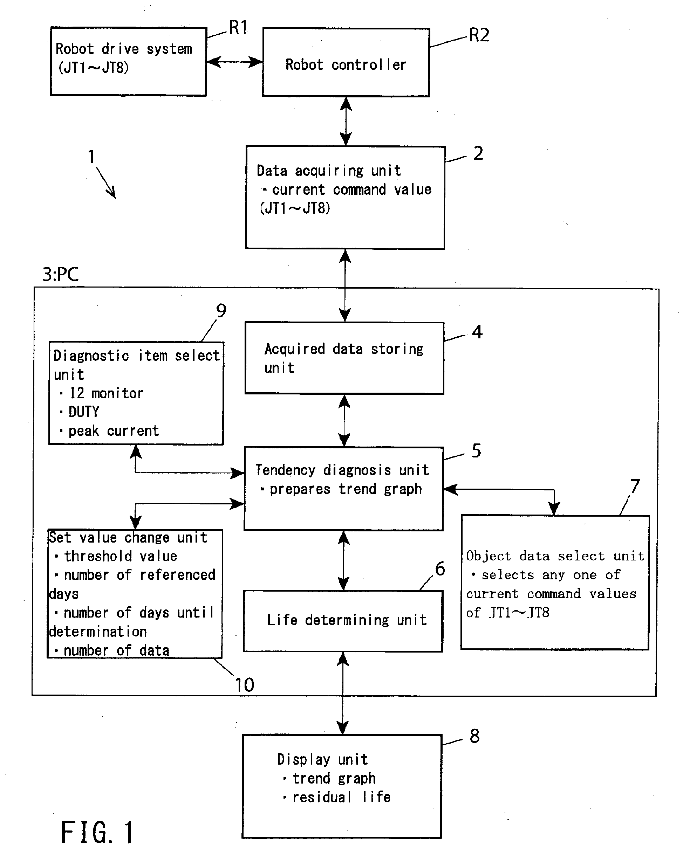

The robot which is an object of the robot maintenance assist device according to this embodiment comprises a robot drive system R1 having eight drive axes JT1 ~ JT8 as illustrated in FIG. 1, and this robot drive system R1 is controlled by a robot controller R2.

Further, a robot maintenance assist device 1 according to this embodiment is a device for predicting life of the robot drive system R1 so as to assist maintenance.

As illustrated in FIG. 1, the robot maintenance assist device 1 comprises a data acquiring unit 2 for acquiring data about current command value of each servo motor corresponding to each drive axis JT1 ~ JT8 of the robot drive system R1.

As for data acquisition by the data acquiring unit 2, data may be acquired from the robot controller R2 via a communication line such as internet or data may be directly acquired from the robot controller R2 by connecting a substrate for data acquisition to the robot controller R2.

Data about current command value acquired by the data acquiring unit 2 is sent to an acquired data storing unit 4 configured in a PC 3 and stored there. The acquired data storing unit 4 stores data about a plurality of current command values related to a plurality of servo motors configuring the robot drive system R1.

The robot maintenance assist device 1 further comprises a tendency diagnosis unit 5 for diagnosing future changing tendency of current command values of the servo motors. This tendency diagnosis unit 5 diagnoses future changing tendency of current command values based on data about current command values stored in the acquired data storing unit 4. The diagnosis result can be output as a trend graph, for example.

The robot maintenance assist device 1 further comprises a life determining unit 6 for determining life of the robot drive system R1. This life determining unit 6 determines a term until a current command value of the servo motor configuring the robot drive system R1 reaches a previously set value based on the future changing tendency of current command values acquired by the tendency diagnosis unit 5.

The robot maintenance assist device 1 further comprises an object data select unit 7 for selecting a current command value to be diagnosed by the tendency diagnosis unit 5 from a plurality of current command values corresponding to each drive axis JT1 ~ JT8. Thus, the object data select unit 7 can select a drive axis JT1 ~ JT8 whose residual life should be determined.

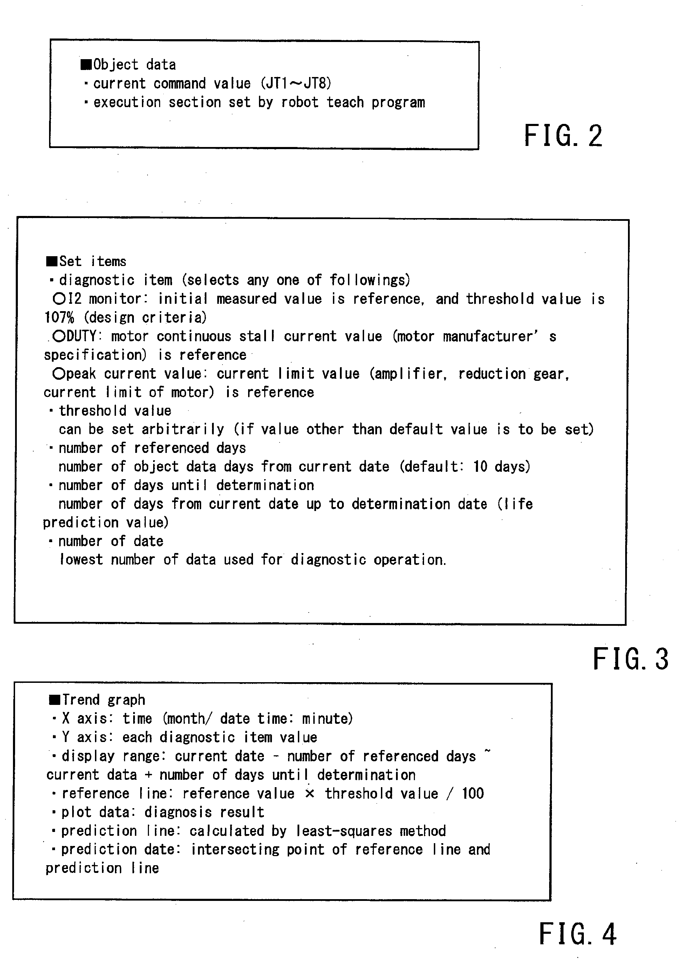

As illustrated in FIG. 2, the object data selected by the object data select unit 7 is data in an execution section set by a robot teach program. Thus, only data about current command values during robot operation is to be diagnosed and data during robot stopping is not to be diagnosed. Thereby, accuracy of determination of residual life can be improved.

The tendency diagnosis unit 5 of the robot maintenance assist device 1 has a function of making a display unit 8 display a prediction line representing future changing tendency of a current command value as a graph (trend graph). Further, the life determining unit 6 is configured to determine a time point corresponding to an intersecting point of a prediction line displayed in the graph and a reference line set in the graph as a predicted life.

The robot maintenance assist device 1 further comprises a diagnostic item select unit 9 for selecting a diagnostic item of current command value to be diagnosed by the tendency diagnosis unit 5 from an I2 monitor, duty (DUTY), and peak current.

As illustrated in FIG. 3, in the I2 monitor, an initial measured value is a reference and a threshold value is 1070 (design criteria). In the DUTY, a motor continuous stall current value (motor manufacturer's specification) is a reference. In the peak current value, a current limit value (amplifier, reduction gear,current limit of motor) is a reference.

Additionally, the robot maintenance assist device 1 comprises a set value change unit 10 for changing a set value used upon the diagnosis in the tendency diagnosis unit 5. As illustrated in FIG. 3, set values used upon the diagnosis in the tendency diagnosis unit 5 include a threshold value regarding the current command value, the number of object data days (number of referenced days) from a current date, the number of days (number of days until determination) from the current date up to a determination date (life prediction value), and the lowest number of data used for diagnostic operation.

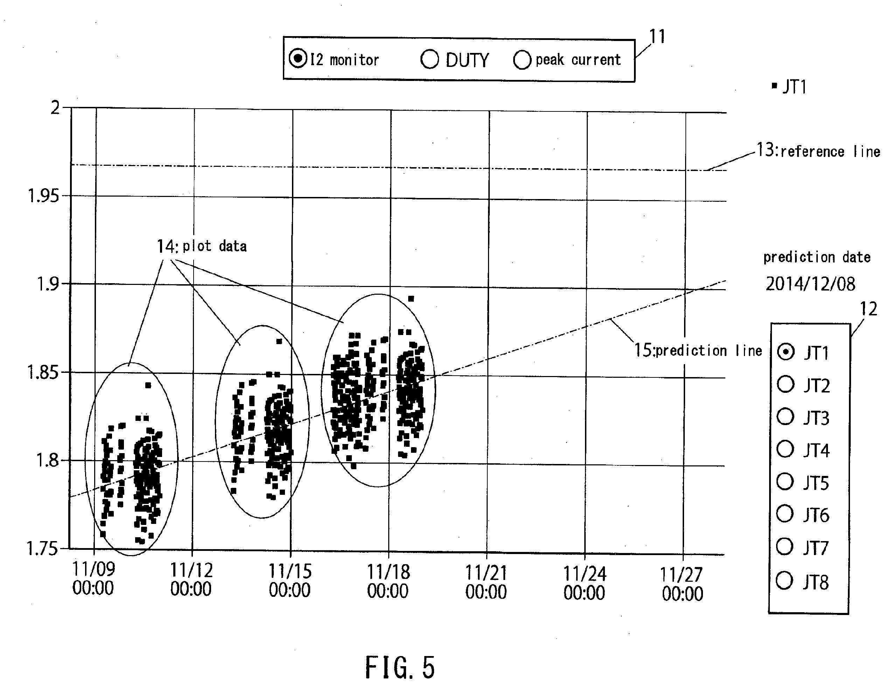

A graph displayed in the display unit 8 of the robot maintenance assist device 1 includes items shown in FIG. 4 and an example of the graph is illustrated in FIG. 5. In FIG. 5, in a case when the I2 monitor is selected in a diagnostic item select portion 11, a diagnosis result of the current command value regarding the servo motor corresponding to the drive axis JT1 selected in an object data select portion 12 is illustrated.

A X axis (horizontal axis) of the graph illustrated in FIG. 5 represents date and time when the data of the current command value is acquired and a Y axis (vertical axis) represents the current command value of the servo motor corresponding to the drive axis JT1, provided that the I2 monitor is a diagnostic item. The number of referenced days in the graph is 10 days which is a default. A reference line 13 to be a determination reference of a residual life is determined as the reference value * the threshold value / 100.

In the graph, a prediction line 15 acquired by the least-squares method based on a plot data 14 of the current command value is shown. An intersecting point of this prediction line 15 and the reference line 13 is shown as a prediction date 16 of a residual life.

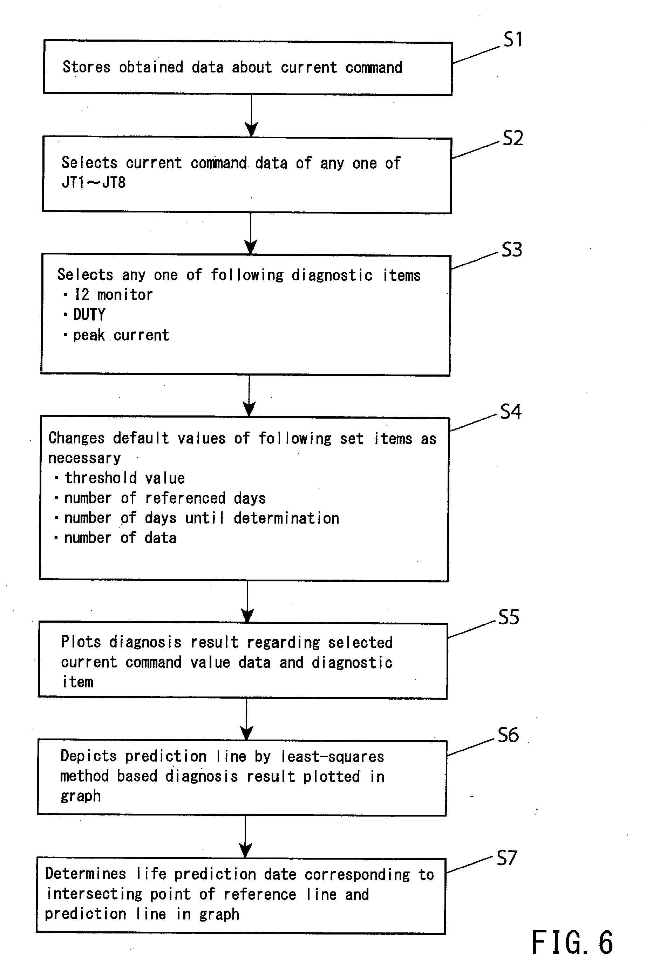

Next, a method of predicting life of the robot drive system R1 so as to assist maintenance of the robot using the above-mentioned robot maintenance assist device 1 will be described referring to FIG. 6.

First, data about the current command values of the servo motors corresponding to a plurality of drive axes JT1 ~ JT8 acquired by the data acquiring unit 2 is stored by the acquired data storing unit 4 (acquired data storing process S1). Subsequently, the current command value to be diagnosed is selected from a plurality of current command values corresponding to a plurality of drive axes JT1 ~ JT8 (object data select process S2).

Next, a diagnostic item is selected from the I2 monitor, DUTY, and peak current by the diagnostic item select unit 9. (diagnostic item select process S3). Further, default values of the threshold value, number of referenced days, number of days until determination, and number of data are changed by the set value change unit 10 as necessary (set value change process S4).

Next, diagnosis results regarding the selected current command value data and diagnostic items are plotted in a graph by the tendency diagnosis unit 5 (diagnosis result plot process S5). Subsequently, a prediction line is depicted by the least-squares method based the diagnosis results plotted in the graph (prediction line depicting process S6). The diagnosis result plot process S5 and the prediction line depicting process S6 configure a tendency diagnosis process for diagnosing future changing tendency of the current command value.

Next, the life determining unit 6 determines a term until the current command value reaches the previously set reference line 13 based on the future changing tendency of the current command value acquired in the tendency diagnosis process S5, S6 (life determining process S7). Thus, in the life determining process S7, an intersecting point of the prediction line 15 displayed in the graph in FIG. 5 and the reference line 13 set in the graph is determined as a predicted life.

As stated above, according to this embodiment, a residual life of the robot drive system R1 can be predicted at high accuracy based on the data of the current command value of the servo motor of the robot drive system R1. Thereby, maintenance of the robot can be performed in a timely manner, and stop time of the robot due to breakdown can be minimized so that decline in productivity of the production line where the robot is installed can be surely prevented.

Particularly, in this embodiment, the tendency diagnosis unit 5 performs diagnosis based on only the current command value during robot operation, and therefore prediction accuracy of residual life of the robot drive system R1 can be further enhanced.

As another embodiment of the present invention, in the above-stated configuration of the embodiment, a device connectable to the PC3 connected to the robot controller R2 via a communication network such as internet can be installed in addition to or instead of the display unit 8 connected to the robot controller R2.

A so-called smart device such as a tablet terminal, smartphone, and laptop PC is suitable for such a device. Alternatively, a common desktop PC also can be used. Thus, any device may be employed as long as it is connectable to the PC 3 via a communication network in a place away from the site where the robot is installed.

In the robot maintenance assist device and method according to this embodiment, the robot condition can be remotely confirmed even in a place away from the site where the robot is installed. Thereby, the maintenance work of the robot can be performed more properly and timely.

### Description of Reference Numerals

- 1: robot maintenance assist device
- 2: data acquiring unit
- 3: PC
- 4: acquired data storing unit
- 5: tendency diagnosis unit
- 6: life determining unit
- 7: object data select unit
- 8: display unit
- 9: diagnostic item select unit
- 10: set value change unit
- 11: diagnostic item select portion
- 12: object data select portion
- 13: reference line of graph
- 14: plot data
- 15: prediction line of graph
- 16: prediction date of residual life
- R1: robot drive system
- R2: robot controller
- 51: acquired data storing process
- S2: object data select process
- S3: diagnostic item select process
- S4: set value change process
- S5: diagnosis result plot process (tendency diagnosis process)
- S6: prediction line depicting process (tendency diagnosis process)
- S7: life determining process

## Claims

1. A robot maintenance assist device (1) for predicting a life of a drive system (R1) of a robot so as to assist a maintenance, comprising:
an acquired data storing unit (4) for storing an acquired data about a current command value of a servo motor configuring the drive system (R1) of the robot;
a tendency diagnosis unit (5) for diagnosing a future changing tendency of the current command value based on the data of the current command value stored in the acquired data storing unit (4);
a set value change unit (10) for changing a set value used upon a diagnosis in the tendency diagnosis unit (5); and
a life determining unit (6) for determining a term until the current command value reaches a previously set value based on the future changing tendency of the current command value acquired by the tendency diagnosis unit (5),
wherein
the tendency diagnosis unit (5) is configured to perform a diagnosis based on the data of the current command value acquired only during an operation of the robot,
the tendency diagnosis unit (5) has a function of making a display unit (8) display a prediction line representing the future changing tendency of the current command value as a graph,
the life determining unit (6) is configured to determine a time point corresponding to an intersecting point of the prediction line displayed in the graph and a reference line set in the graph as a predicted life, the reference line being determined as a reference value * a threshold value / 100,
the set value used upon a diagnosis in the tendency diagnosis unit (5) includes at least one of a threshold value regarding the current command value, a number of object data days from a current date, a number of days from the current date up to a determination date, and a lowest number of data used for a diagnostic operation,
the tendency diagnosis unit (5) is further configured to acquire a motor continuous stall current value of the drive system (R1) of the robot as a reference, and
the life determining unit (6) is configured to determine the term until the current command value reaches the previously set value based on further the acquired motor continuous stall current value which is used as the reference.

2. The robot maintenance assist device (1) according to claim 1,
wherein the acquired data storing unit (4) is configured to store data about a plurality of current command values about a plurality of servo motors configuring the drive system (R1) of the robot, and
wherein the robot maintenance assist device (1) further comprises an object data select unit (7) for selecting the current command value to be diagnosed by the tendency diagnosis unit (5) from the plurality of current command values.

3. The robot maintenance assist device (1) according to claim 1 or 2, further comprising a display unit (8) for acquiring at least one of a diagnosis result of the tendency diagnosis unit (5) and a determination result of the life determining unit (6) via a communication network and displaying the diagnosis result and/or the determination result.

4. A robot maintenance assist method for predicting a life of a drive system (R1) of a robot so as to assist a maintenance, comprising:
an acquired data storing process of storing an acquired data about a current command value of a servo motor configuring the drive system (R1) of the robot;
a tendency diagnosis process of diagnosing a future changing tendency of the current command value based on the data of the current command value stored by the acquired data storing process;
a set value change process for changing a set value used upon a diagnosis in the tendency diagnosis process; and
a life determining process for determining a term until the current command value reaches a previously set value based on the future changing tendency of the current command value acquired by the tendency diagnosis process,
wherein
in the tendency diagnosis process, a diagnosis is performed based on the data of the current command value acquired only during an operation of the robot,
in the tendency diagnosis process, a prediction line representing the future changing tendency of the current command value is displayed as a graph on a display unit (8),
in the life determining process, a time point corresponding to an intersecting point of the prediction line displayed in the graph and a reference line set in the graph is determined as a predicted life, the reference line being determined as a reference value * a threshold value / 100,
the set value used upon a diagnosis in the tendency diagnosis process includes at least one of a threshold value regarding the current command value, a number of object data days from a current date, a number of days from the current date up to a determination date, and a lowest number of data used for a diagnostic operation,
in the tendency diagnosis process, a motor continuous stall current value of the drive system (R1) of the robot is acquired as a reference, and
in the life determining process, the term until the current command value reaches the previously set value is determined based on further the acquired motor continuous stall current value which is used as the reference.

5. The robot maintenance assist method according to claim 4,
wherein, in the acquired data storing process, the data about a plurality of current command values about a plurality of servo motors configuring the drive system (R1) of the robot is stored, and
wherein the robot maintenance assist method further comprises an object data select process for selecting the current command value to be diagnosed in the tendency diagnosis process from the plurality of current command values.

## Patentansprüche

1. Roboterwartungsunterstützungsvorrichtung (1) zum Vorhersagen einer Lebensdauer eines Antriebssystems (R1) eines Roboters, um eine Wartung zu unterstützen, umfassend:
eine Erfasste-Daten-Speichereinheit (4) zum Speichern erfasster Daten über einen aktuellen Befehlswert eines Servomotors, der das Antriebssystem (R1) des Roboters konfiguriert;
eine Tendenzdiagnoseeinheit (5) zum Diagnostizieren einer zukünftigen Änderungstendenz des aktuellen Befehlswerts basierend auf den Daten des aktuellen Befehlswerts, die in der Erfasste-Daten-Speichereinheit (4) gespeichert sind;
eine Sollwert-Änderungseinheit (10) zum Ändern eines Sollwerts, der bei einer Diagnose in der Tendenzdiagnoseeinheit (5) verwendet wird, und
eine Lebensdauerbestimmungseinheit (6) zum Bestimmen eines Zeitraums, bis der aktuelle Befehlswert einen zuvor eingestellten Wert erreicht, basierend auf der zukünftigen Änderungstendenz des aktuellen Befehlsworts, der von der Tendenzdiagnoseeinheit (5) erfasst wird,
wobei
die Tendenzdiagnoseeinheit (5) konfiguriert ist, eine Diagnose basierend auf den Daten des aktuellen Befehlsworts durchzuführen, der nur während eines Betriebs des Roboters erfasst wird,
die Tendenzdiagnoseeinheit (5) eine Funktion aufweist, eine Anzeigeeinheit (8) zu veranlassen, eine Vorhersagelinie anzuzeigen, die die zukünftige Änderungstendenz des aktuellen Befehlsworts als einen Graphen darstellt,
die Lebensdauerbestimmungseinheit (6) konfiguriert ist, einen Zeitpunkt, der einem Schnittpunkt der in dem Graphen angezeigten Vorhersagelinie und einer in dem Graphen eingestellten Referenzlinie entspricht, als eine vorhergesagte Lebensdauer zu bestimmen, wobei die Referenzlinie als ein Referenzwert * ein Schwellenwert/100 bestimmt wird,
der Sollwert, der bei einer Diagnose in der Tendenzdiagnoseeinheit (5) verwendet wird, zumindest einen von einem Schwellenwert bezüglich des aktuellen Befehlswerts, einer Anzahl von Objektdatentagen ab einem aktuellen Datum, einer Anzahl von Tagen ab dem aktuellen Datum bis zu einem Bestimmungsdatum und eine niedrigste Anzahl von Daten, die für einen diagnostischen Vorgang verwendet werden, enthält,
die Tendenzdiagnoseeinheit (5) ferner konfiguriert ist, einen aktuellen Wert eines Motordauerstillstands des Antriebssystems (R1) des Roboters als Referenz zu erfassen, und
die Lebensdauerbestimmungseinheit (6) konfiguriert ist, die Dauer zu bestimmen, bis der aktuelle Befehlswert den zuvor eingestellten Wert erreicht, und zwar ferner basierend auf dem erfassten aktuellen Wert eines Motordauerstillstands, der als Referenz verwendet wird.

2. Roboterwartungsunterstützungsvorrichtung (1) nach Anspruch 1,
wobei die Erfasste-Daten-Speichereinheit (4) konfiguriert ist, Daten über eine Mehrzahl von aktuellen Befehlswerten über eine Mehrzahl von Servomotoren zu speichern, die das Antriebssystem (R1) des Roboters konfigurieren, und wobei die Roboterwartungsunterstützungsvorrichtung (1) ferner eine Objektdatenauswahleinheit (7) zum Auswählen des durch die Tendenzdiagnoseeinheit (5) zu diagnostizierenden aktuellen Befehlswerts aus der Mehrzahl von aktuellen Befehlswerten umfasst.

3. Roboterwartungsunterstützungsvorrichtung (1) nach Anspruch 1 oder 2, ferner umfassend eine Anzeigeeinheit (8) zum Erfassen zumindest eines von einem Diagnoseergebnis der Tendenzdiagnoseeinheit (5) und einem Bestimmungsergebnis der Lebensdauerbestimmungseinheit (6) über ein Kommunikationsnetzwerk und Anzeigen des Diagnoseergebnisses und/oder des Bestimmungsergebnisses.

4. Roboterwartungsunterstützungsverfahren zum Vorhersagen einer Lebensdauer eines Antriebssystems (R1) eines Roboters, um eine Wartung zu unterstützen, umfassend:
einen Erfasste-Daten-Speicherprozess des Speicherns erfasster Daten über einen aktuellen Befehlswert eines Servomotors, der das Antriebssystem (R1) des Roboters konfiguriert;
einen Tendenzdiagnoseprozess des Diagnostizierens einer zukünftigen Änderungstendenz des aktuellen Befehlswerts basierend auf den Daten des aktuellen Befehlswerts, die durch den Erfasste-Daten-Speicherprozess gespeichert werden,
einen Sollwert-Änderungsprozess des Änderns eines Sollwerts, der bei einer Diagnose in dem Tendenzdiagnoseprozess verwendet wird, und
einen Lebensdauerbestimmungsprozess des Bestimmens eines Zeitraums, bis der aktuelle Befehlswert einen zuvor eingestellten Wert erreicht, basierend auf der zukünftigen Änderungstendenz des aktuellen Befehlswerts, der durch den Tendenzdiagnoseprozess erfasst wird,
wobei
in dem Tendenzdiagnoseprozess eine Diagnose basierend auf den Daten des aktuellen Befehlswerts durchgeführt wird, der nur während eines Betriebs des Roboters erfasst wird,
in dem Tendenzdiagnoseprozess eine Vorhersagelinie, die die zukünftige Änderungstendenz des aktuellen Befehlswerts darstellt, als ein Graph auf einer Anzeigeeinheit (8) angezeigt wird,
in dem Lebensdauerbestimmungsprozess ein Zeitpunkt, der einem Schnittpunkt der in dem Graphen angezeigten Vorhersagelinie und einer in dem Graphen eingestellten Referenzlinie entspricht, als eine vorhergesagte Lebensdauer bestimmt wird, wobei die Referenzlinie als ein Referenzwert * ein Schwellenwert/100 bestimmt wird,
der Sollwert, der bei einer Diagnose in dem Tendenzdiagnoseprozess verwendet wird, zumindest einen von einem Schwellenwert bezüglich des aktuellen Befehlswerts, einer Anzahl von Objektdatentagen ab einem aktuellen Datum, einer Anzahl von Tagen ab dem aktuellen Datum bis zu einem Bestimmungsdatum und eine niedrigste Anzahl von Daten, die für einen diagnostischen Vorgang verwendet werden, enthält,
in dem Tendenzdiagnoseprozess ein aktueller Wert eines Motordauerstillstands des Antriebssystems (R1) des Roboters als Referenz erfasst wird, und in dem Lebensdauerbestimmungsprozess die Dauer, bis der aktuelle Befehlswert den zuvor eingestellten Wert erreicht, ferner basierend auf dem erfassten aktuellen Wert eines Motordauerstillstands bestimmt wird, der als Referenz verwendet wird.

5. Roboterwartungsunterstützungsverfahren nach Anspruch 4,
wobei in dem Erfasste-Daten-Speicherprozess die Daten über eine Mehrzahl von aktuellen Befehlswerten über eine Mehrzahl von Servomotoren, die das Antriebssystem (R1) des Roboters konfigurieren, gespeichert werden, und wobei das Roboterwartungsunterstützungsverfahren ferner einen Objektdatenauswahlprozess zum Auswählen des in dem Tendenzdiagnoseprozess zu diagnostizierenden aktuellen Befehlswerts aus der Mehrzahl von aktuellen Befehlswerten umfasst.

## Revendications

1. Dispositif d'aide à la maintenance de robot (1) pour prédire une durée d'un système d'entraînement (R1) d'un robot de manière à aider à une maintenance, comprenant :
un module de stockage de données acquises (4) pour stocker des données acquises concernant une valeur de commande actuelle d'un servomoteur configurant le système d'entraînement (R1) du robot ;
un module de diagnostic de tendance (5) pour diagnostiquer une tendance de changement future de la valeur de commande actuelle en fonction des données de la valeur de commande actuelle stockées dans le module de stockage de données acquises (4) ;
un module de changement de valeur définie (10) pour changer une valeur définie utilisée lors d'un diagnostic dans le module de diagnostic de tendance (5) ; et
un module de détermination de durée (6) pour déterminer un terme jusqu'à ce que la valeur de commande actuelle atteigne une valeur définie précédemment en fonction de la tendance de changement future de la valeur de commande actuelle acquise par le module de diagnostic de tendance (5), dans lequel
le module de diagnostic de tendance (5) est configuré pour réaliser un diagnostic en fonction des données de la valeur de commande actuelle acquises uniquement au cours d'une opération du robot,
le module de diagnostic de tendance (5) a une fonction consistant à faire afficher à un module d'affichage (8) une ligne de prédiction représentant la tendance de changement future de la valeur de commande actuelle comme graphe,
le module de détermination de durée (6) est configuré pour déterminer un point dans le temps correspondant à un point d'intersection de la ligne de prédiction affichée dans le graphe et d'une ligne de référence définie dans le graphe comme une durée prédite, la ligne de référence étant déterminée comme une valeur de référence * une valeur seuil / 100,
la valeur définie utilisée lors d'un diagnostic dans le module de diagnostic de tendance (5) inclut au moins un élément parmi une valeur seuil concernant la valeur de commande actuelle, un nombre de jours de données d'objet à partir d'une date actuelle, un nombre de jours à partir de la date actuelle jusqu'à une date de détermination, et un nombre le plus bas de données utilisées pour une opération de diagnostic,
le module de diagnostic de tendance (5) est en outre configuré pour acquérir une valeur actuelle de calage continu de moteur du système d'entraînement (R1) du robot comme une référence, et
le module de détermination de durée (6) est configuré pour déterminer le terme jusqu'à ce que la valeur de commande actuelle atteigne la valeur définie précédemment en fonction en outre de la valeur actuelle de calage continu de moteur acquise qui est utilisée comme la référence.

2. Dispositif d'aide à la maintenance de robot (1) selon la revendication 1,
dans lequel le module de stockage de données acquises (4) est configuré pour stocker des données concernant une pluralité de valeurs de commande actuelles concernant une pluralité de servomoteurs configurant le système d'entraînement (R1) du robot, et
dans lequel le dispositif d'aide à la maintenance de robot (1) comprend en outre un module de sélection de données d'objet (7) pour sélectionner la valeur de commande actuelle devant être diagnostiquée par le module de diagnostic de tendance (5) parmi la pluralité de valeurs de commande actuelles.

3. Dispositif d'aide à la maintenance de robot (1) selon la revendication 1 ou 2, comprenant en outre un module d'affichage (8) pour acquérir au moins un d'un résultat de diagnostic du module de diagnostic de tendance (5) et d'un résultat de détermination du module de détermination de durée (6) par le biais d'un réseau de communication et afficher le résultat de diagnostic et/ou le résultat de détermination.

4. Procédé d'aide à la maintenance de robot pour prédire une durée d'un système d'entraînement (R1) d'un robot de manière à aider à une maintenance, comprenant :
un processus de stockage de données acquises consistant à stocker des données acquises concernant une valeur de commande actuelle d'un servomoteur configurant le système d'entraînement (R1) du robot ;
un processus de diagnostic de tendance consistant à diagnostiquer une tendance de changement future de la valeur de commande actuelle en fonction des données de la valeur de commande actuelle stockées par le processus de stockage de données acquises ;
un processus de changement de valeur définie pour changer une valeur définie utilisée lors d'un diagnostic dans le processus de diagnostic de tendance ; et
un processus de détermination de durée pour déterminer un terme jusqu'à ce que la valeur de commande actuelle atteigne une valeur définie précédemment en fonction de la tendance de changement future de la valeur de commande actuelle acquise par le processus de diagnostic de tendance, dans lequel
dans le processus de diagnostic de tendance, un diagnostic est réalisé en fonction des données de la valeur de commande actuelle acquises uniquement au cours d'une opération du robot,
dans le processus de diagnostic de tendance, une ligne de prédiction représentant la tendance de changement future de la valeur de commande actuelle est affichée comme graphe sur un module d'affichage (8),
dans le processus de détermination de durée, un point dans le temps correspondant à un point d'intersection de la ligne de prédiction affichée dans le graphe et d'une ligne de référence définie dans le graphe est déterminé comme une durée prédite, la ligne de référence étant déterminée comme une valeur de référence * une valeur seuil / 100,
la valeur définie utilisée lors d'un diagnostic dans le processus de diagnostic de tendance inclut au moins un élément parmi une valeur seuil concernant la valeur de commande actuelle, un nombre de jours de données d'objet à partir d'une date actuelle, un nombre de jours à partir de la date actuelle jusqu'à une date de détermination, et un nombre le plus bas de données utilisées pour une opération de diagnostic,
dans le processus de diagnostic de tendance, une valeur actuelle de calage continu de moteur du système d'entraînement (R1) du robot est acquise comme une référence, et
dans le processus de détermination de durée, le terme jusqu'à ce que la valeur de commande actuelle atteigne la valeur définie précédemment est déterminé en fonction en outre de la valeur actuelle de calage continu de moteur acquise qui est utilisée comme la référence.

5. Procédé d'aide à la maintenance de robot selon la revendication 4,
dans lequel, dans le processus de stockage de données acquises, les données concernant une pluralité de valeurs de commande actuelles concernant une pluralité de servomoteurs configurant le système d'entraînement (R1) du robot sont stockées, et
dans lequel le procédé d'aide à la maintenance de robot comprend en outre un processus de sélection de données d'objet pour sélectionner la valeur de commande actuelle devant être diagnostiquée dans le processus de diagnostic de tendance parmi la pluralité de valeurs de commande actuelles.
